# EUROPÄISCHE PATENTSCHRIFT

(11) **EP 0 673 594 B1**
(45) Veröffentlichungstag und Bekanntmachung des Hinweises auf die Patenterteilung: **23.12.1998**
(21) Anmeldenummer: 95102713.5
(22) Anmeldetag: 25.02.1995
(51) Int. Cl.: A01D 45/02

(54) **Mähvorrichtung für stengeliges Halmgut**
Mowing device for stem cereals
Dispositif pour faucher des céréales à tige

(30) Priorität: 22.03.1994 DE 4409788; 26.11.1994 DE 4442164
(43) Veröffentlichungstag der Anmeldung: 27.09.1995
(73) Patentinhaber: CLAAS SAULGAU GmbH, D-88348 Saulgau (DE)
(72) Erfinder: Moosbrucker, Karl, 88348 Saulgau (DE)

(56) Entgegenhaltungen:
- EP-A- 0 069 898
- EP-A- 0 508 189
- DE-A- 3 308 077
- DE-U- 9 109 490

## Beschreibung

Die Erfindung bezieht sich auf eine Mähvorrichtung für stengeliges Halmgut nach dein Oberbegriff des Anspruches 1.

Mähvorrichtungen dieser Gattung sind durch die EP-A-5 08 189 bekannt geworden.

Ähnliche Mähvorrichtungen sind z. B. durch die DE-OS 33 08 077 oder das DBGM 91 09 490 bekannt geworden. Die Aufgabe solcher Mähvorrichtungen besteht darin, in Reihe oder in Breitsaat angebautes Halmgut, besonders Mais, abzumähen und die gemähten Stengel zu einer Abgabestelle zu befördern. Es ist dabei wichtig, den Stengel beim Abschneiden festzuhalten, und den bereits abgetrennten Stengel an seinem Fuß beim Transport festzuhalten. Diesen Bedingungen kommt besonders die DE-OS 3308077 ziemlich nahe. Die dort gezeigten Förderscheiben haben jedoch den Nachteil, daß sie gleichsinnig, wenn auch mit geringerer Geschwindigkeit, umlaufen als die Schneidscheiben. Die Umfangsgeschwindigkeit der Schneidscheiben muß deshalb fast so hoch gehalten werden, als wenn sie im freien Schnitt schneiden müßten. Dies verursacht einen hohen Leistungsbedarf, großen Verschleiß und große Beschädigungsgefahr für die Schneidmesser.

Diese Nachteile sollen durch die Erfindung vermieden werden. Darüber hinaus sollen Bedingungen geschaffen werden, durch die das Erntegut an der Abgabestelle besonders leicht aus der Förderscheibe gelöst werden kann.

Ein weiteres Problem besteht darin, zu verhindern, daß die abgeschnittenen Halmgutstengel nach vorne herausfallen, sondern in den Förderscheiben festgehalten werden. Um dies zu erreichen, ist schon vorgeschlagen worden, auf er Oberseite der Schneidscheibe in Abständen von einander mehrere streifenförmige Leitbleche anzuordnen, die schräg zur Tangente der Schneidscheibe stehen und die Aufgabe haben, die Stengelfüße zu erfassen und radial nach innen zu leiten. Die Wirkung dieser Leitbleche ist durch Versuche erwiesen. Sie haben indessen aber auch die Nachteile, daß sie in den Bereichen, in denen sie angeordnet sind, die Funktion der Schneidscheibe behindern und besonders bei dünnem, feuchtem Halmgut oder bei grünem Unterwuchs zu Verstopfungen führen, weil sich Grüngut an der Stirnfläche der Leitbleche verfängt und nicht abfließt.

Die Erfindung dient auch dazu, diese Nachteile dadurch zu vermeiden, daß die Oberseite der Schneidscheibe von störenden Aufbauten freigehalten und dennoch durch nahe ihrem Umlang sich lückenlos erstreckende Mittel bewirkt wird, daß die von der Schneidscheibe abgeschnittenen Halmgutstengel am Herausfallen aus dem Bereich der Schneidscheibe und der Förderscheibe gehindert werden.

Diese Aufgaben werden erfindungsgemäß einerseits dadurch gelöst, daß die übereinander angeordneten Schneidscheiben und Förderscheiben gegenläufig angetrieben werden. Dies hat zur Folge, daß sich der Halmgutstengel beim Schnitt gegen Teile der Förderscheibe abstützt und die Schneidscheibe deshalb mit relativ geringer Unifangsgeschwindigkeit angetrieben werden kann.

Bei Rotationsmähwerken ist es bekannt, koaxial übereinander angeordnete Schneid- und Gegenschneiden gegenläufig zueinander anzutreiben. Das Dokument 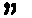 Komunaltechnik und Landschaftspflege" aus der Zeitschrift Landtechnik 12 - 92 beschreibt auf Seiten 599 und 600 eine solche Ausführung, bei der wie bei den früheren Mähwerken mit oszillierenden Messerbalken, bewegte Messer mit gegenläufig bewegten Gegenmessern sich unmittelbar berührend zusammenwirken, und das Grasgut einem Scherenschnitt vergleichbar, abschneiden. Weil die umlaufenden Gegenmesser das Grasgut nach dem Schnitt nur unzulänglich abfördern können, sind oberhalb der Gegenmesser Förderhilfen an Fördertrommeln vorgesehen, die im wesentlichen das Schnittgut für eine Schwadablage nach rückwärts abfördern. Die Ernte von grobstengeligem Halmgut, wie Maispflanzen, ist mit einer solchen Ausführung nicht möglich, weil die umlaufenden Gegenmesser wegen ihres 0-Abstandes zu den umlaufenden Mähmessern unter den abgeschnittenen Maisstengeln durchschlüpfen würden, und die an den Trommeln vorgesehenen Förderhilfen die Maisstengel zum Abschneiden und Weiterfördern zu einer definierten Abgabeeinrichtung nicht halten können.

Weitere erfindungsgemäße Ausgestaltungsmerkmale für die Förderscheiben sind mit den Ansprüchen 2 und 3 beansprucht.

Die Ausgestaltung der Schneidscheiben ist Gegenstand der Ansprüche 4 - 8. Die Ausbildung der Schneiden soll bewirken, daß der Halmgutstengel beim Abschneiden von einer fördernden Kante oder Fläche der Förderscheibe gehalten und damit abgestützt wird und daß der abgeschnittene Halmgutstengel beim Transport bis zur Abgabestelle immer wieder angehoben wird, so daß kein Mehrfachschnitt auftritt.

In den weiteren Ansprüchen 9 - 13 sind Merkmale enthalten, die teilweise vorbekannt sind, die sich aber durch die Ausgestaltung nach den vorhergehenden Ansprüchen besonders vorteilhaft und wirkungsvoll anwenden lassen.

Eine andere Wirkung wird dadurch erreicht, daß an der Oberseite der Schneidscheibe eine Vielzahl von schrägstehenden oder bogenförmigen Kerben oder erhabenen, aber niedrigen Rippen vorhanden sind, die zur Tangente derart angestellt sind, daß die in den Aussparungen der Förderscheibe relativ zu der Schneidscheibe bewegten Halmgutstengel vorzugsweise durch Reibung radial nach innen geleitet werden.

Nach einem anderen erfindungsgemäßen Vorschlag sollen die Schneidscheiben innerhalb des Schneidbereiches mit einer oder mehreren kreisringförmigen Vertiefungen versehen sein, in die die Füße der Halmgutstengel nach dem Abschneiden eintauchen können. Es ist auch möglich, weitere förderrichtungsbestimmende Mittel auf der Schneidscheibe vorzusehen, durch die zwischen die Schneidscheibe und einer Förderscheibe eingedrungener grüner Unterwuchs oder feine Halmteile nach außen befördert werden.

Durch diese Maßnahmen wird erreicht, daß die Halmgutstengel ungestört in den Raum zwischen Schneidscheibe und Förderscheibe eintreten können und dann nach innen gewiesen werden, ohne daß dünne Halme oder grüner Unterwuchs in Umfangsrichtung der Scheiben eingezogen werden, oder doch wieder daraus entfernt werden.

Die Erfindung wird anhand von 10 Abbildungen beispielsweise erläutert:

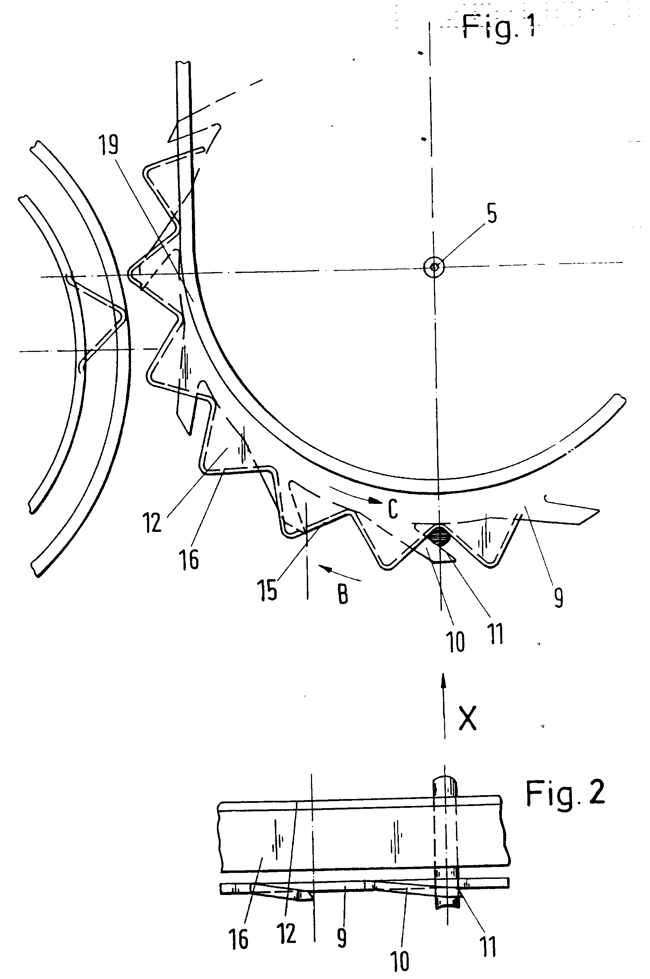

- Figur 01: zeigt eine Mähvorrichtung von oben,
- Figur 02: zeigt den gleichen Gegenstand in einer Teilansicht in Richtung des Pfeiles X,

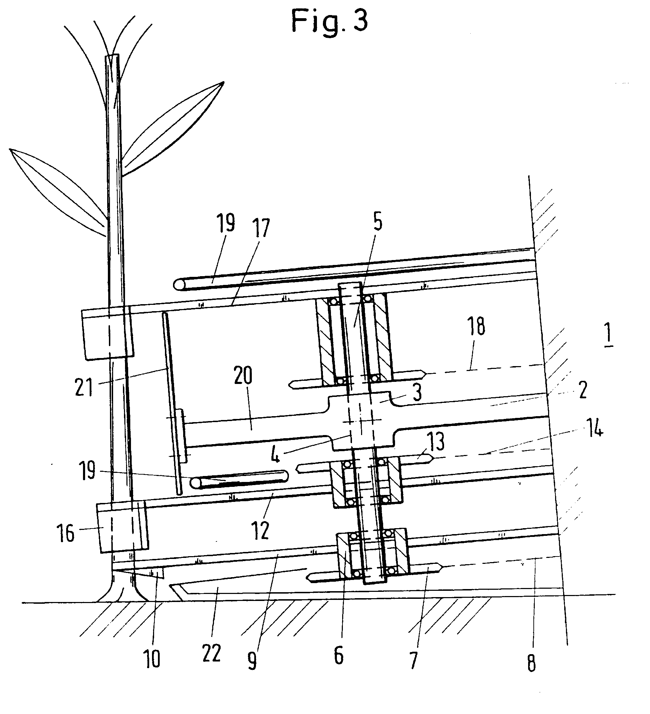

- Figur 03: zeigt den gleichen Gegenstand von der Seite
- Figur 04: zeigt einen Ausschnitt aus einer Schneidscheibe und einer darüber liegenden Förderscheibe von oben
- Figur 05: zeigt einen Schnitt C-C durch eine Schneidscheibe, vergrößert,
- Figur 06: zeigt den gleichen Gegenstand in anderer Ausführung,
- Figur 07: zeigt den Gegenstand von Fig. 4 in Seitenansicht,
- Figur 08: zeigt einen gleichen Ausschnitt wie in Fig. 4, aber in einer anderen Ausführung,
- Figur 09: zeigt einen Ausschnitt aus einer Schneidscheibe und einer darüber liegenden Förderscheibe in Seitenansicht,
- Figur 10: zeigt eine Schneidscheibe nach Figur 09 in Draufsicht

An einem nicht weiter dargestellten Maschinengestell (1) ist ein sich in Fahrtrichtung nach vorn erstreckender Tragarm (2) befestigt. Er erweitert sich zu einer Lagerfaust (3) mit einer senkrechten Bohrung (4). In diese Bohrung (4) ist eine Achse (5) fest eingepaßt. Am unteren Ende der Achse (5) ist eine Lagerbüchse (6) drehbar gelagert. Mit der Lagerbüchse (6) ist ein Kettenrad (7) fest verbunden. Dieses steht in Wirkverbindung mit einer unteren Antriebskette (8).

Mit der Lagerbüchse (6) ist eine Schneidscheibe (9) fest verbunden, die an ihrem Umfang eine Vielzahl von Schneiden (10) mit Schneidkanten (11) trägt. Die Schneidscheibe (9) wird durch die untere Antriebskette (8) in Richtung des Pfeiles C angetrieben. Die Schneidkanten (11) sind in einem Winkel von etwa 45° zur Radialen derart angestellt, daß die äußere Spitze der Schneidkante (11) in Drehrichtung verläuft. Die Schneiden (10) sind außerdem aus der Ebene der Schneidscheibe (9) heraus leicht verschränkt, so daß die nachlaufenden Flächen etwas höher sind als die Schneidkanten (11).

Oberhalb der Schneidscheibe (9) ist eine Förderscheibe (12) auf der Achse (5) dreh- und antreibbar gelagert. Sie wird mittels eines Kettenrades (13) und einer mittleren Antriebskette (14) angetrieben. Die Förderscheibe (12) hat an ihrem Umfang eine Vielzahl von taschenförmigen Aussparungen (15), die sich mit einem Winkel von 90° V-förmig nach außen erweitern. Mit der Förderscheibe (12) fest verbunden ist ein wellenförmiger, nach unten gerichteter Steg (16), der den taschenförmigen Aussparungen (15) folgt. Die Förderscheibe (12) wird in Richtung des Pfeiles B angetrieben.

Oberhalb der Lagerfaust (3) ist auf der Achse (5) eine weitere Förderscheibe (17), die im wesentlichen gleich wie die Förderscheibe (12) ausgestaltet ist, und die durch eine obere Antriebskette (18) im gleichen Drehsinn wie die Förderscheibe (12) angetrieben wird. Die obere Förderscheibe (17) kann gleichen oder etwas kleineren Außendurchmesser als die Förderscheibe (12) haben. Die Umfangsgeschwindigkeit der Förderscheibe (17) kann gleich oder vorzugsweise kleiner als die Förderscheibe (12) sein.

Oberhalb der Förderscheiben (12, 17) sind bügelförmige Ausräumer (19) vorgesehen, die im Einzugsbereich im Abstand von den taschenförmigen Aussparungen (15) sind, im Abgabebereich aber so weit nach außen verlaufen, daß sie die in den taschenförmigen Aussparungen (15) transportierten Halmgutstengel aus den Taschen herausdrücken.

An einem oder mehreren Armen (20) des Tragarmes (2) ist ein feststehendes Schutzblech (21) befestigt, das die Antriebe der Mähvorrichtung nach vorne und der Seite abdeckt. Unterhalb der Schneidscheibe (9) stützt sich die Mähvorrichtung auf einen feststehenden Gleitschuh (22) ab.

Bei der Arbeit bewegt sich die Mähvorrichtung umgekehrt zur Richtung des Pfeiles X nach vorwärts. In Reihen- oder in Breitsaat stehende Maisstengel gelangen dabei in eine der umlaufenden taschenförmigen Aussparungen (15). Hier werden sie von einer der Schneidkanten (11) erfaßt und in Richtung auf eine der fördernden Flächen der Förderscheibe (12) gedrückt und dabei abgeschnitten. Der abgeschnittene Stengel bleibt infolge Reibung seines Fußes an den Schneiden (10) immer mit mäßigen, Druck an den fördernden Flächen. Die Verdrilling der Schneiden (10) gibt dem Fuß des Stengels immer wieder einen kleinen Impuls nach oben, so daß ein Mehrfachschnitt vermieden wird.

Ein oberer Teil des Halmgutstengels gelangt in den Wirkungsbereich einer taschenförmigen Aussparung (15) einer oberen Förderscheibe (17) und wird von ihr weiterbefördert. Wenn die Umfangsgeschwindigkeit der oberen Förderscheibe (17) kleiner ist als die der unteren Förderscheibe (12), dann bleibt der obere Teil des Stengels gegenüber seinem Fuß zurück, so daß dieser von nicht dargestellten Einzugsvorrichtungen leichter erfaßt werden kann.

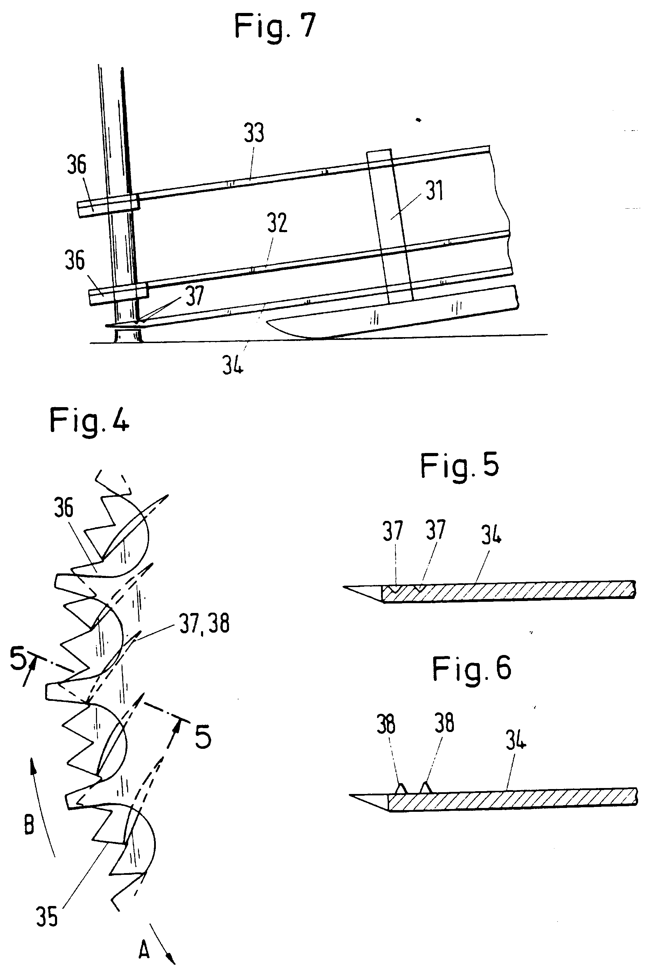

Gemäß einer anderen Ausführungsform sind auf einer Achse (31) eine untere Förderscheibe (32) und eine obere Förderscheibe (33), sowie unabhängig davon eine Schneidscheibe (34) dreh- und antreibbar gelagert. Die Schneidscheibe (34) wird im Sinne des Pfeiles A angetrieben. An ihrem Umfang ist sie mit einer Vielzahl von Schneiden (35) versehen. Die Förderscheiben (32, 33), die im Sinne des Pfeiles B angetrieben werden, haben an ihrem Umfang eine Vielzahl von taschenförmigen Aussparungen (36). Die Schneidscheiben (34) haben im inneren Bereich der Schneiden (35) an ihrer Oberseite entweder bogenförmige Kerben (37) (Fig. 5) oder bogenförmige erhabene Rippen (38) (Fig. 6), die zu der Tangente derart angestellt sind, daß ihr Anfang in Laufrichtung radial weiter außen ist, als ihr in Laufrichtung nachfolgendes Ende.

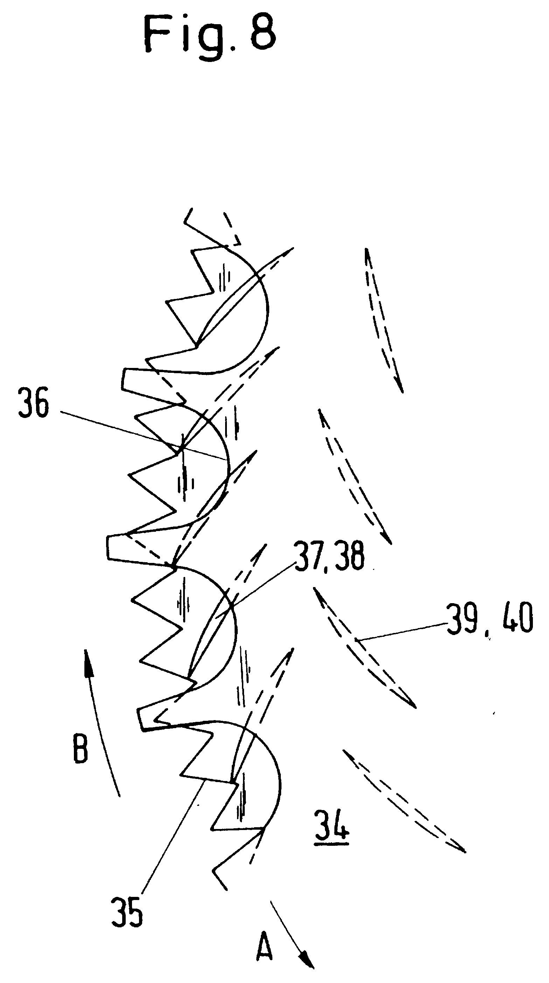

Bei einer etwas anders ausgestatteten Schneidscheibe (34) (Fig. 8) sind radial innerhalb von bogenförmigen Kerben (37) oder erhabenen Rippen (38) eine weitere Serie von bogenförmigen Kerben (39) oder erhabenen Rippen (40) vorgesehen, bei denen ihr Anfang in Laufrichtung radial weiter innen ist, als ihr in Laufrichtung nachfolgendes Ende.

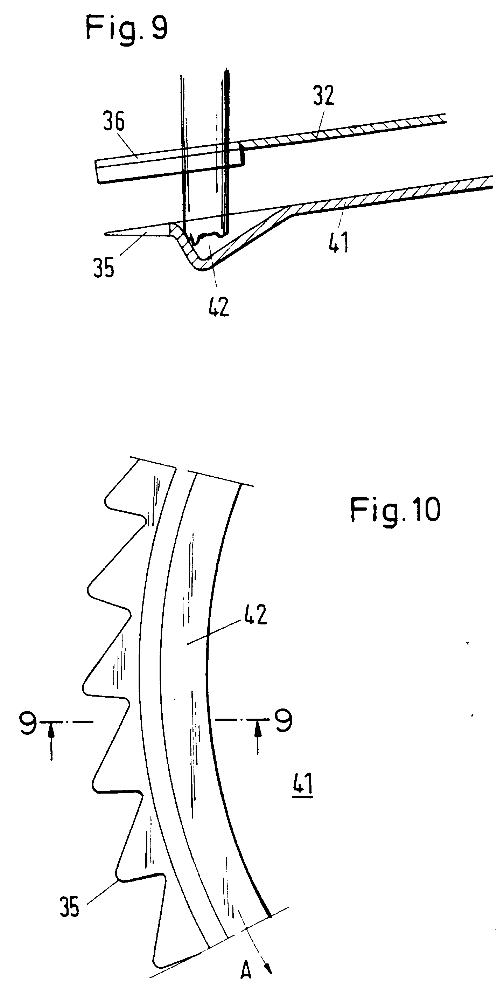

Bei einer anderen Ausführungsform (Fig. 9 und 10) ist die Schneidscheibe (41) radial innerhalb der Schneiden (35) kreisringförmig mit einer Vertiefung (42) versehen, in die der Fuß des abgeschnittenen Halmgutstengels nach dem Abschneiden eintauchen kann.

Alle drei Ausführungsformen (Fig. 5, Fig. 6 und Fig. 9 und 10) dienen dazu, den abgeschnittenen, Halmgutstengel nach innen zu weisen (Fig. 5 und Fig. 6) oder im inneren Bereich festzuhalten (Fig. 9 und 10). Dadurch bleiben die Halmgutstengel sicher im Wirkungsbereich der taschenförmigen Aussparungen (36) der Förderscheiben (32, 33) und werden dort bis zu einer Abgabestelle weiter befördert. Bei der Ausführung nach Fig. 8 werden von der inneren Reihe von Kerben (39) oder Rippen (40) bis dorthin eingedrungener grüner Unterwuchs oder kleine Halmteile abgewiesen und nach außen befördert.

## Patentansprüche

1. Mähvorrichtung für stengeliges Halmgut 'wie Mais, mit einer um eine etwa senkrechte Achse umlaufenden Schneidscheibe (9), die an ihrem Umfang Schneiden (10) trägt, und mit mindestens einer mit Abstand über der Schneidscheibe (9) koaxial zu dieser umlaufenden Förderscheibe (12, 17) mit einer Vielzahl von am Umfang angeordneten taschenförmigen Aussparungen (15) zur Aufnahme der der Stengel beim Schnitt und zur Förderung der abgeschnittenen Stengel zu einer durch die Anwesenheit eines feststehenden oder umlaufenden Ausräumers (19) definierten Abgabestelle, dadurch gekennzeichnet, daß die Schneidscheibe (9) gegenläufig zu der Förderscheibe (12, 17) angetrieben ist.

2. Mähvorrichtung nach Anspruch 1, dadurch gekennzeichnet, daß sich die taschenförmigen Aussparungen (15) der Förderscheibe (12) etwa in einem rechten Winkel V-förmig nach außen öffnen.

3. Mähvorrichtung nach Anspruch 2, dadurch gekennzeichnet, daß die V-förmigen Aussparungen (15) als nach oben und unten offene, großflächige Taschen ausgebildet sind, die den Halmgutstengel aufnehmen und zu einer Abgabestelle fördern.

4. Mähvorrichtung nach den Ansprüchen 1 - 3, dadurch gekennzeichnet, daß eine Schneidscheibe (9) mit einer Vielzahl von Schneiden (10) unterhalb der Förderscheibe (12) umläuft.

5. Mähvorrichtung nach Anspruch 4, dadurch gekennzeichnet, daß die Schneidkanten (11) der Schneiden (10) in Umlaufrichtung am Außendurchmesser nach vorwärts geneigt sind.

6. Mähvorrichtung nach Anspruch 5, dadurch gekennzeichnet, daß die Schneidkanten (11) und die fordernden Flächen der Taschen (15) etwa parallel sind.

7. Mähvorrichtung nach den Ansprüchen 4 - 6, dadurch gekennzeichnet, daß die Schneiden (10) so gedrillt sind, daß ihre Schneidkanten (11) niedriger sind als die in Umlaufrichtung zurückliegenden Flächen der Schneiden (10).

8. Mähvorrichtung nach den Ansprüchen 1 - 7, dadurch gekennzeichnet, daß der Außendurchmesser der Schneidscheiben (9) etwas kleiner ist als derjenige der Förderscheiben (12).

9. Mähvorrichtung nach den Ansprüchen 1 - 8, dadurch gekennzeichnet, daß über der Förderscheibe (12), die die Schneidscheibe (9) überdeckt, eine oder mehrere weitere ähnlich ausgestaltete Förderscheiben (17) angeordnet sind, die im gleichen Drehsinn umlaufen.

10. Mähvorrichtung nach Anspruch 9, dadurch gekennzeichnet, daß die oben liegenden Förderscheiben (17) mit gleicher oder geringerer Umfangsgeschwindigkeit wie die untere Förderscheibe (12) angetrieben werden.

11. Mähvorrichtung nach den Ansprüchen 9 und 10, dadurch gekennzeichnet, daß den oben liegenden Förderscheiben (17) ebenfalls Ausräumer (19) zugeordnet sind.

12. Mähvorrichtung nach den Ansprüchen 1 - 11, dadurch gekennzeichnet, daß mehrere erfindungsgemäße Mähvorrichtungen etwa quer zur Fahrtrichtung nebeneinander angeordnet sind, wobei die Mähvorrichtungen in Fahrtrichtung auch gestaffelt sein können.

13. Mähvorrichtung nach Anspruch 12, dadurch gekennzeichnet, daß je zwei nebeneinander angeordnete Mähvorrichtungen eine gemeinsame Abgabestelle haben.

14. Mähvorrichtung nach Anspruch 1 dadurch gekennzeichnet, daß auf der Oberseite der Schneidscheibe (34, 41) sich über ihren Umfang nahezu lückenlos erstreckende Mittel vorgesehen sind, die geeignet sind, die von der Schneidscheibe (34, 41) abgeschnittenen Halmgutstengel am Herausfallen zu hindern.

15. Mähvorrichtung nach Anspruch 14, dadurch gekennzeichnet, daß die Schneidscheibe (34) an ihrer Oberseite mit einer Vielzahl von schrägstehenden oder bogenförmigen Kerben (37) versehen ist, deren Steigung so gewählt ist, daß die Füße der Halmgutstengel im Zusammenwirken mit der fördernden Flanke der taschenförmigen Aussparungen (36) der Förderscheibe (32) nach innen geleitet werden.

16. Mähvorrichtung nach Anspruch 14, dadurch gekennzeichnet, daß die Schneidscheibe (34) an ihrer Oberseite mit einer Vielzahl von schrägstehenden oder bogenförmigen Rippen (38) versehen ist, deren Steigung so gewählt ist, daß die Füße der Halmgutstengel im Zusammenwirken mit der fördernden Flanke der taschenförmigen Aussparungen (36) der Förderscheibe (32) nach innen geleitet werden.

17. Mähvorrichtung nach Anspruch 14, dadurch gekennzeichnet, daß die Schneidscheibe (41) innerhalb des Schneidbereiches mit einer oder mehreren kreisringförmigen Vertiefungen (42) versehen ist, in die die Füße der Halmgutstengel nach dem Abschneiden eintauchen können.

18. Mähvorrichtung nach einem der Ansprüche 14 bis 17, dadurch gekennzeichnet, daß die Schneidscheiben (34, 41) radial innerhalb der Mittel, die vorgesehen sind, um die abgeschnittenen Halmgutstengel am Herausfallen zu hindern, an Ihrer Oberseite weitere schrägstehende oder bogenförmige Kerben (39) oder Rippen (40) besitzen, deren Steigung so gewählt ist, daß eingedrungener grüner Unterwuchs oder feine Halmteile nach außen geleitet werden.

## Claims

1. A mowing apparatus for stalked cereal such as corn, comprising a cutting disc (9) which rotates about an approximately perpendicular axis and which carries cutting portions (10) at its periphery, and at least one conveyor disc (12, 17) which rotates coaxially with respect to the cutting disc (9) at a spacing above same and which has a plurality of pocket-shaped recesses (15) arranged at the periphery for receiving the stalks in the cutting operation and for conveying the cut-off stalks to a discharge location which is defined by the presence of a stationary or rotating expulsion member (19) characterised in that the cutting disc (9) is driven in the opposite direction to the conveyor disc (12, 17).

2. A mowing apparatus according to claim 1 characterised in that the pocket-shaped recesses (15) of the conveyor disc (12) open outwardly in a V-shape approximately at a right angle.

3. A mowing apparatus according to claim 2 characterised in that the V-shaped recesses (15) are in the form of upwardly and downwardly open pockets of large area which receive the cereal stalk and convey same to a discharge location.

4. A mowing apparatus according to claims 1 to 3 characterised in that a cutting disc (9) with a plurality of cutting portions (10) rotates beneath the conveyor disc (12).

5. A mowing apparatus according to claim 4 characterised in that the cutting edges (11) of the cutting portions (10) are inclined forwardly in the direction of rotation at the outside diameter.

6. A mowing apparatus according to claim 5 characterised in that the cutting edges (11) and the conveying surfaces of the pockets (15) are approximately parallel.

7. A mowing apparatus according to claims 4 to 6 characterised in that the cutting portions (10) are twisted in such a way that their cutting edges (11) are lower than the surfaces of the cutting portions (10), which trail in the direction of rotation.

8. A mowing apparatus according to claims 1 to 7 characterised in that the outside diameter of the cutting discs (9) is somewhat smaller than that of the conveyor discs (12).

9. A mowing apparatus according to claims 1 to 8 characterised in that arranged above the conveyor disc (12) which covers over the cutting disc (9) are one or more further conveyor discs (17) which are of a similar configuration and which rotate in the same rotational direction.

10. A mowing apparatus according to claim 9 characterised in that the upwardly disposed conveyor discs (17) are driven at a peripheral speed which is the same as or less than the lower conveyor disc (12).

11. A mowing apparatus according to claims 9 and 10 characterised in that expulsion members (19) are also associated with the upwardly disposed conveyor discs (17).

12. A mowing apparatus according to claims 1 to 11 characterised in that a plurality of mowing apparatuses according to the invention are arranged in side-by-side relationship approximately transversely with respect to the direction of travel, wherein the mowing apparatuses can also be staggered in the direction of travel.

13. A mowing apparatus according to claim 12 characterised in that each two mowing apparatuses which are arranged in side-by-side relationship have a common discharge location.

14. A mowing apparatus according to claim 1 characterised in that provided on the top side of the cutting disc (34, 41) are means which extend almost without a gap over the periphery thereof and which are suitable for preventing the cereal stalks which have been cut off by the cutting disc (34, 41) from falling out.

15. A mowing apparatus according to claim 14 characterised in that at its top side the cutting disc (34) is provided with a plurality of inclined or arcuate slots (37) whose slope is so selected that, co-operating with the conveying edge of the pocket-shaped recesses (36) of the conveyor disc (32), the bottoms of the stalks are passed inwardly.

16. A mowing apparatus according to claim 14 characterised in that at its top side the cutting disc (34) is provided with a plurality of inclined or arcuate ribs (38) whose slope is so selected that, co-operating with the conveying edge of the pocket-shaped recesses (36) of the conveyor disc (32), the bottoms of the stalks are passed inwardly.

17. A mowing apparatus according to claim 14 characterised in that within the cutting region the cutting disc (41) is provided with one or more annular depressions (42) into which the bottoms of the stalks can dip after the stalks have been cut off.

18. A mowing apparatus according to one of claims 14 to 17 characterised in that at their top side and radially within the means provided for preventing the cut-off cereal stalks from falling out the cutting discs (34, 41) have further inclined or arcuate slots (39) or ribs (40) whose slope is so selected that green undergrowth which has penetrated into the arrangement or fine stalk pieces are passed outwardly.

## Revendications

1. Dispositif de fauchage de céréales à tiges telles que du maïs, comprenant un disque de sectionnement (9) qui tourne autour d'un axe sensiblement vertical, et supporte des lames (10) sur son pourtour ; et au moins un disque de convoyage (12, 17) qui tourne à distance au-dessus du disque de sectionnement (9), coaxialement à ce dernier, et présente une pluralité d'échancrures (15) en forme de poches, disposées sur le pourtour, en vue de recevoir les tiges au cours du sectionnement, et de convoyer les tiges sectionnées vers une zone de délivrance définie par la présence d'un extracteur (19) fixe ou rotatif, caractérisé par le fait que le disque de sectionnement (9) est entraîné en sens inverse du disque de convoyage (12, 17).

2. Dispositif de fauchage selon la revendication 1, caractérisé par le fait que les échancrures (15) en forme de poches du disque de convoyage (12) s'ouvrent en forme de V vers l'extérieur, en décrivant sensiblement un angle droit.

3. Dispositif de fauchage selon la revendication 2, caractérisé par le fait que les échancrures (15) configurées en V sont réalisées sous la forme de poches de grande superficie, ouvertes vers le haut et vers le bas, qui prélèvent la tige de céréale et l'acheminent vers une zone de délivrance.

4. Dispositif de fauchage selon les revendications 1-3, caractérisé par le fait qu'un disque de sectionnement (9), muni d'une pluralité de lames (10), accomplit une révolution au-dessous du disque de convoyage (12).

5. Dispositif de fauchage selon la revendication 4, caractérisé par le fait que les arêtes tranchantes (11) des lames (10) sont inclinées vers l'avant sur le diamètre extérieur dans le sens périphérique.

6. Dispositif de fauchage selon la revendication 5, caractérisé par le fait que les arêtes tranchantes (11), et les surfaces convoyeuses des poches (15), sont approximativement parallèles.

7. Dispositif de fauchage selon les revendications 4-6, caractérisé par le fait que les lames (10) sont vrillées de façon telle que leurs arêtes tranchantes (11) soient plus basses que les surfaces des lames (10) qui se trouvent en retrait dans le sens périphérique.

8. Dispositif de fauchage selon les revendications 1-7, caractérisé par le fait que le diamètre extérieur des disques de sectionnement (9) est sensiblement plus petit que celui des disques de convoyage (12).

9. Dispositif de fauchage selon les revendications 1-8, caractérisé par le fait qu'un ou plusieurs disque(s) supplémentaire(s) de convoyage (17) de réalisations similaires, tournant dans le même sens de rotation, se trouve(nt) au-dessus du disque de convoyage (12) recouvrant le disque de sectionnement (9).

10. Dispositif de fauchage selon la revendication 9, caractérisé par le fait que les disques de convoyage (17), situés en partie haute, sont entraînés à une vitesse périphérique égale ou inférieure à celle du disque inférieur de convoyage (12).

11. Dispositif de fauchage selon les revendications 9 et 10, caractérisé par le fait que des extracteurs (19) sont pareillement affectés aux disques de convoyage (17) situés en partie haute.

12. Dispositif de fauchage selon les revendications 1-11, caractérisé par le fait que plusieurs dispositifs de fauchage conformes à l'invention sont agencés en juxtaposition, à peu près transversalement par rapport à la direction du déplacement, les dispositifs de fauchage pouvant également être échelonnés dans la direction du déplacement.

13. Dispositif de fauchage selon la revendication 12, caractérisé par le fait que deux dispositifs de fauchage, respectivement agencés en juxtaposition, présentent une zone commune de délivrance.

14. Dispositif de fauchage selon la revendication 1, caractérisé par le fait que des moyens prévus sur la face supérieure du disque de sectionnement (34, 41), s'étendant quasiment sans discontinuité sur le pourtour de ce dernier, sont appropriés pour éviter la chute des tiges de céréales sectionnées par ledit disque de sectionnement (34, 41).

15. Dispositif de fauchage selon la revendication 14, caractérisé par le fait que le disque de sectionnement (34) est pourvu, à sa face supérieure, d'une pluralité d'encoches (37) agencées à l'oblique ou en arc de cercle, dont l'inclinaison est choisie de telle sorte que les pieds des tiges de céréales soient dirigés vers l'intérieur en coopérant avec le flanc convoyeur des échancrures (36) en forme de poches du disque de convoyage (32).

16. Dispositif de fauchage selon la revendication 14, caractérisé par le fait que le disque de sectionnement (34) est pourvu, à sa face supérieure, d'une pluralité de nervures (38) agencées à l'oblique ou en arc de cercle, dont l'inclinaison est choisie de telle sorte que les pieds des tiges de céréales soient dirigés vers l'intérieur en coopérant avec le flanc convoyeur des échancrures (36) en forme de poches du disque de convoyage (32).

17. Dispositif de fauchage selon la revendication 14, caractérisé par le fait que le disque de sectionnement (41) est muni, à l'intérieur de la zone de sectionnement, d'un ou plusieurs renfoncement(s) (42) décrivant la forme d'un anneau circulaire, dans le(s)quel(s) les pieds des tiges de céréales peuvent pénétrer à l'issue du sectionnement.

18. Dispositif de fauchage selon l'une des revendications 14 à 17, caractérisé par le fait que les disques de sectionnement (34, 41) possèdent à leur face supérieure, radialement à l'intérieur des moyens prévus pour éviter une chute des tiges de céréales sectionnées, d'autres encoches (39) ou nervures (40) agencées à l'oblique ou en arc de cercle, dont l'inclinaison est choisie de telle sorte que des pousses non matures ayant pénétré, ou de fins fragments de chaumes, soient dirigé(e)s vers l'extérieur.
